# EUROPEAN PATENT SPECIFICATION

(11) **EP 1 387 355 B1**
(45) Date of publication and mention of the grant of the patent: **11.04.2007**
(21) Application number: 03253670.8
(22) Date of filing: 11.06.2003
(51) Int. Cl.: G11B 7/09

(54) **Objective lens driving apparatus for optical pickup**
Vorrichtung zum Antrieb einer Objektivlinse in einem optischen Kopf
Dispositif d'entraînement d'une lentille d'objectif dans une tête optique

(30) Priority: 09.07.2002 KR 2002039781
(43) Date of publication of application: 04.02.2004
(73) Proprietor: SAMSUNG ELECTRONICS CO., LTD., Suwon-City, Kyungki-do (KR)
(72) Inventor: Kim, Kwang, Suwon-si, Gyeonggi-do (KR); Kim, Dae-hwan, Seoul (KR); Lee, Jin-won, 109-204 Sunkyung Apt., Seongnam-si, Gyeonggi-do (KR); Cheong, Young-min, 101-1101 Samsung Raemian Apt., Seoul (KR)
(74) Representative: Robinson, Ian Michael

(56) References cited:
- EP-A- 1 369 854
- US-A- 5 905 255
- US-A- 2002 071 376
- US-A1- 2002 021 651
- US-B1- 6 344 936

## Description

The present invention relates to an objective lens driving apparatus for an optical pickup, and more particularly, to an objective lens driving apparatus for an optical pickup having an improved arrangement structure including an elastic support member supporting a blade on which an objective lens is mounted to be capable of elastically moving.

In general, optical pickups record or reproduce information on or from a disk, a recording medium, by emitting light thereon. The light emitted from the optical pickup must be perpendicularly incident on a recording surface of a disk to form a light spot of an accurate focus. If a light incident direction is inclined, an accurate light spot cannot be formed on the disk so that an error may occur during recording and reproduction of data. Thus, to form a light spot accurately on a desired track, the light must be perpendicularly incident on the recording surface of the disk. The adjustment of the light to be perpendicularly incident on the recording surface of the disk is referred to a tilt adjustment or skew adjustment. Typically, an optical pickup apparatus includes a servo mechanism controlling the position of the objective lens in a focusing direction and a tracking direction so that the focus of light can be accurately formed on a desired track of a recording surface of a disk. However, while the servo mechanism controls the focus of a light spot by maintaining a predetermined distance between the objective lens and the recording surface of the disk and the light spot to trace a desired track, it does not directly control the incident angle between the light and the recording surface of the disk. Thus, for more accurate recording and reproduction, a function to dynamically control the tilt is needed.

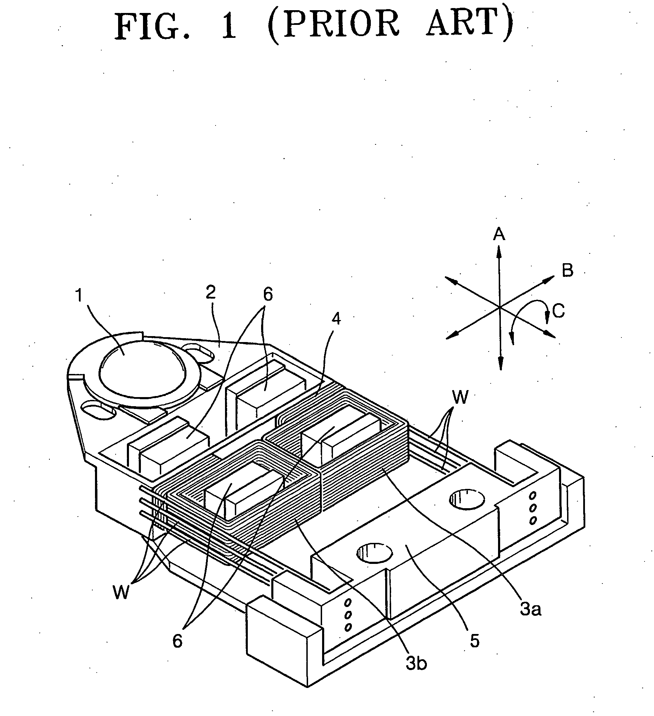

To meet the above demand, a conventional objective lens driving apparatus for an optical pickup, as shown in Figure 1, has been suggested. The optical pickup is a servo mechanism to control the position of an objective lens 1 and includes a focus control mechanism driving a blade 2 where the objective lens 1 is mounted in a focus direction A, a tracking control mechanism driving the blade 2 in a tracking direction B, and a tilt control mechanism driving the blade 2 in a tilt direction C.

First, the focus and tracking control mechanisms are formed by a pair of focus coils 3a and 3b, a tracking coil 4, and a magnet 6. Thus, during control, an electromagnetic force driving the blade 2 in a corresponding direction is generated by applying current to the focus coils 3a and 3b and the tracking coil 4.

The tilt control mechanism typically is formed separate from the focus and tracking control mechanisms. However, as shown in Figure 1, the tilt control mechanism is formed to be commonly used as the focus control mechanism. That is, during tilt control, an electromagnetic force to drive the blade 2 in the tilt direction C is generated by applying current in a different way from the current applied during control to the focus coils 3a and 3b symmetrically arranged to the left and right. In other words, during focus control, currents are identically applied to the left and right focus coils 3a and 3b to drive the blade 2 in the focus direction A. During tilt control, currents are applied in different directions to the left and right focus coils 3a and 3b to drive the blade 2 in the tilt direction C.

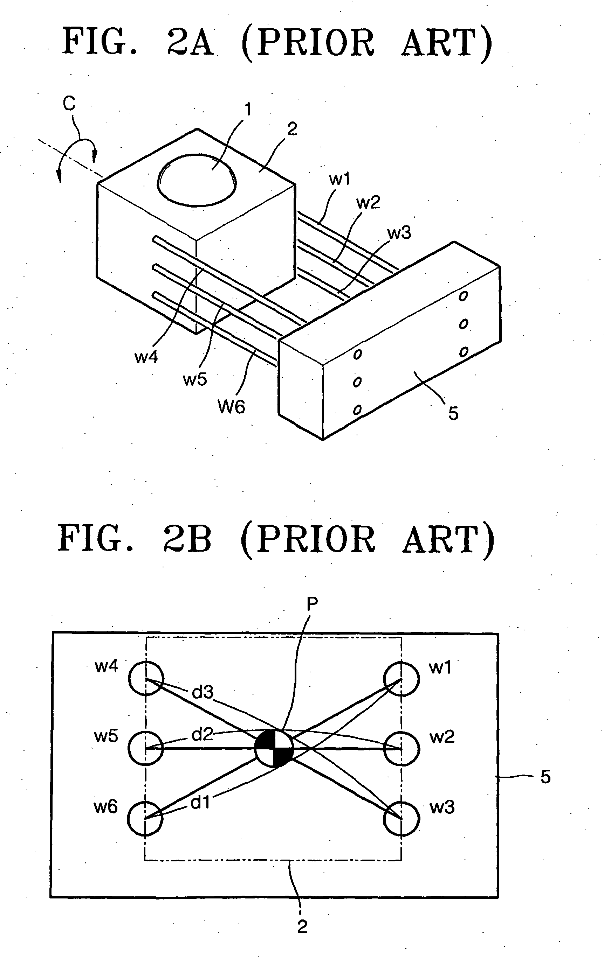

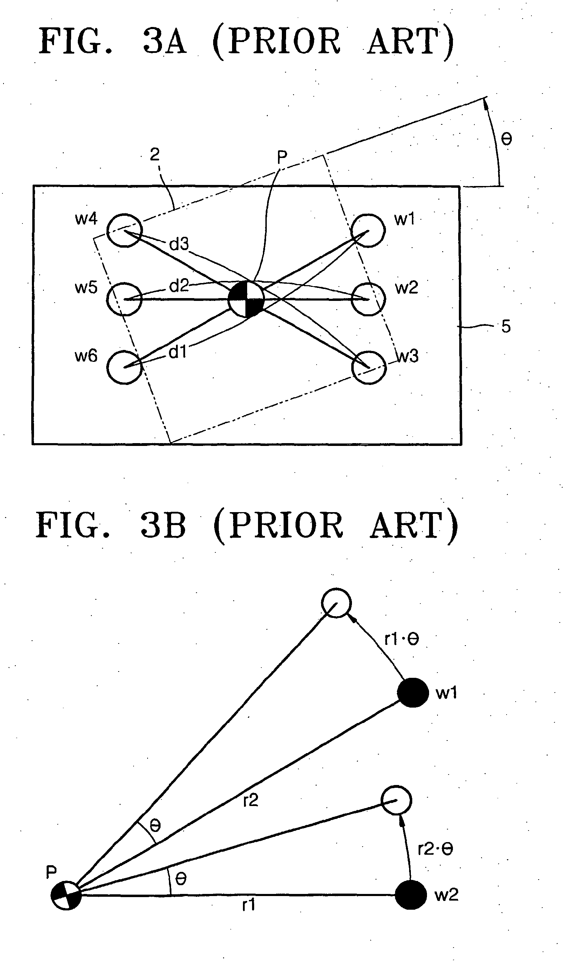

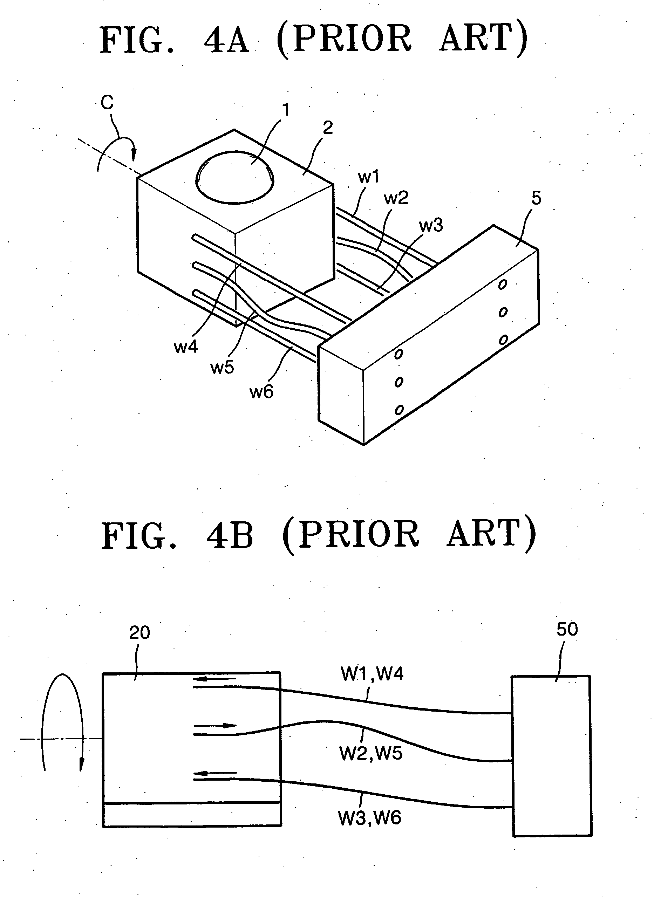

However, a wire W elastically supporting movement of the blade 2 with respect to a holder 5 is typically arranged as shown in Figures 2A and 2B. Figure 2A shows the structure of Figure 1 in a simple form for the convenience of explanation. However, in this wire arrangement, a possibility that the position of the blade 2 becomes unstable during driving of tilt is high. That is, as shown in Figure 2B, three pairs of wires W1 and W6, W2 and W5, and W3 and W4 are arranged to face each other with respect to a point P which is the center of rotation when the blade 2 is tilt driven. Among these wire pairs, two pairs W1 and W6, and W3 and W4, have the same distance therebetween (d1=d3) while the other pair W2 and W5 has a different distance (d2≠d1=d3). In this structure, it is assumed that the blade 2 is moved by an angle θ by the operation of the tilt control mechanism as shown in Figure 3A. In this case, comparing the amounts of deformation between the first and second wires W1 and W2, as shown in Figure 3B, the amount of deformation of the first wire W1 is that r1×θ (r1=d1/2) and the amount of deformation of the second wire W2 is that r2×θ (r2=d2/2) which is less than the amount of deformation of the first wire W1. Likewise, the amounts of deformation of the third, fourth, and sixth wires W3, W4, and W6 are the same as that of the first wire W1 while the amount of deformation of the fifth wire W5 is the same as that of the second wire W2. That is, the first, third, fourth, and sixth wires W1, W3, W4, and W6 are bent to a relatively greater degree while the second and fifth wires W2 and W5 are bent to a relatively smaller degree. Then, a compression force acts on the second and fifth wires W2 and W5 so that the second and fifth wires W2 and W5 are buckled as shown in Figures 4A and 4B. This is a very unstable and, even when a slight vibration or impact is applied, the buckled wires are elastically expanded so that the blade 2 may be moved in an unexpected direction. Therefore, the entire system controlling the position of the objective lens 1 becomes unstable. Thus, an improved structure to solve the above problem is demanded.

US5 905 255 discloses a lens driving apparatus including four wire members that support the movable memory in the focusing, tracking and tilt direction.

US 2002/0071376 discloses a lens driving device including wire supports that permit movement in the focusing, tracking and inclining direction of an optical axis.

With a view to solve or reduce the above and other problems, the present invention provides an objective lens driving apparatus of an optical pickup having an improved structure to support the blade so that the position of the blade can be stably supported during tilt control.

According to the present invention there is provided an apparatus as set forth in the appended claims. Preferred features of the invention will be apparent from the dependent claims, and the description which follows.

According to an aspect of the present invention, an objective lens driving apparatus for an optical pickup comprises a blade on which an objective lens is mounted, a plurality of elastic support members supporting the blade and capable of elastically moving with respect to the blade, and a servo mechanism driving the blade up and down, left and right, and in a rotational direction, wherein the elastic support members are grouped into pairs of the elastic support members arranged to face each other with respect to a center of rotation of the blade, and distances between the elastic support members in the respective pairs are identical is characterised in that there are three or more such pairs (W1, W2; W2, W5; W3, W4; W5, W6; W7, W8; W9, W10) ini which the distances between the elastic support members (W1-W10) in the respective pairs are identical.

For a better understanding of the invention, and to show how embodiments of the same may be carried into effect, reference will now be made, by way of example, to the accompanying diagrammatic drawings in which:
Figure 1 is a view illustrating a conventional objective lens driving apparatus;
Figures 2A and 2B are views illustrating the blade support structure using the wires in the objective lens driving apparatus of Figure 1;
Figures 3A through 4B are views illustrating states in which the wires are deformed during tilt control in the objective lens driving apparatus of Figure 1;
Figure 5 is a view illustrating an objective lens driving apparatus according to a preferred embodiment of the present invention;
Figure 6 is a view illustrating a blade support structure using wires in the objective lens driving apparatus of Figure 5;
Figures 7 through 8B are views illustrating states in which the wires are deformed during tilt control in the objective lens driving apparatus of Figure 5; and
Figures 9 and 10 are views illustrating other examples of the blade support structure of Figure 5 with Figure 10 not being in accordance with the present invention.

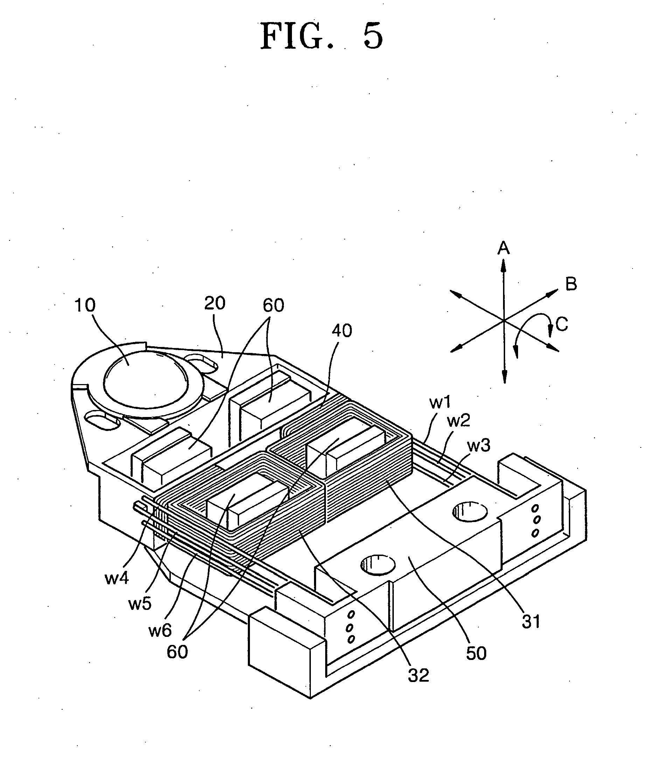

Referring to Figure 5, in an objective lens driving apparatus for an optical pickup, according to a preferred embodiment of the present invention, a blade 20 having an objective lens 10 mounted thereon is movably supported by a plurality of wires W1-W6, i.e., elastic support members, on a holder 50. A pair of focus coils 31 and 32, a tracking coil 40, and a magnet 60 are provided as a servo mechanism to drive the blade 20 in a focusing direction A, a tracking direction B, and a tilt direction C. For tracking control, current is applied to the tracking coil 40 to drive the blade 20 in the tracking direction B through an interaction with the magnet 60. Also, for focus control, current is identically applied to both focus coils 31 and 32 to drive the blade 20 in the focus direction A. Also, for tilt control, different amounts of current are applied to the respective focus coils 31 and 32 to rotate the blade 20 in the tilt direction C.

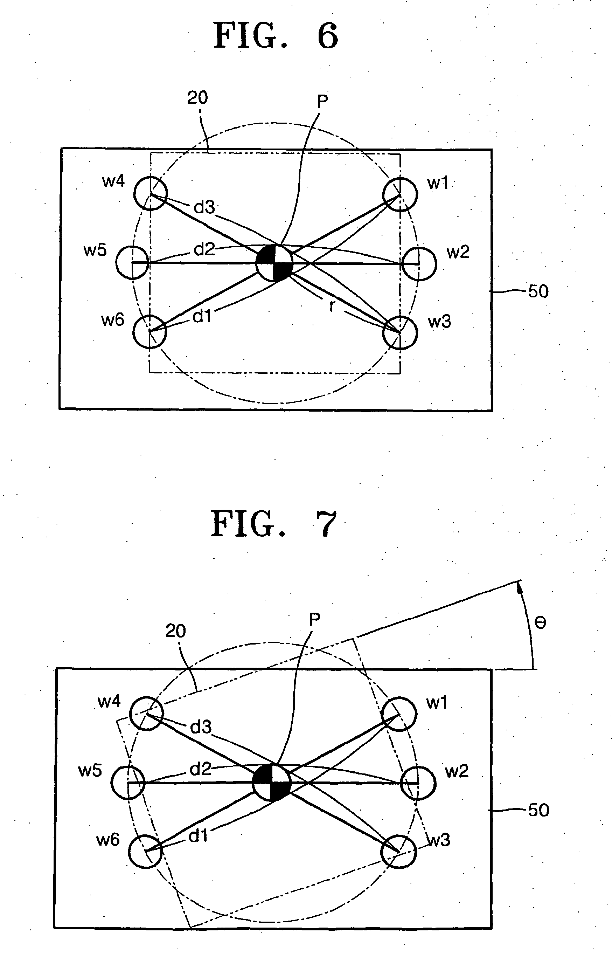

In the present invention, the wires W1-W6 supporting the blade 20 to be elastically movable with respect to the holder 50 are arranged as shown in Figure 6. As shown in the drawing, the wires W1-W6 are symmetrically arranged with respect to a point P, the center of rotation during the tilt control. When two wires arranged oppositely with respect to the point P are paired (W1 and W6, W2 and W5, and W3 and W4), distance between the opposite wires is substantially identical in all pairs (d1=d2=d3). In other words, fixed positions of both ends of each wire which is fixed to the holder 50 and the blade 20 are all located at the same distance r from the center of rotation P. Thus, when an imaginary circle having a radius r and the center P is drawn, the fixed positions of the all wires W1-W6 are located on a circumference of the imaginary circle.

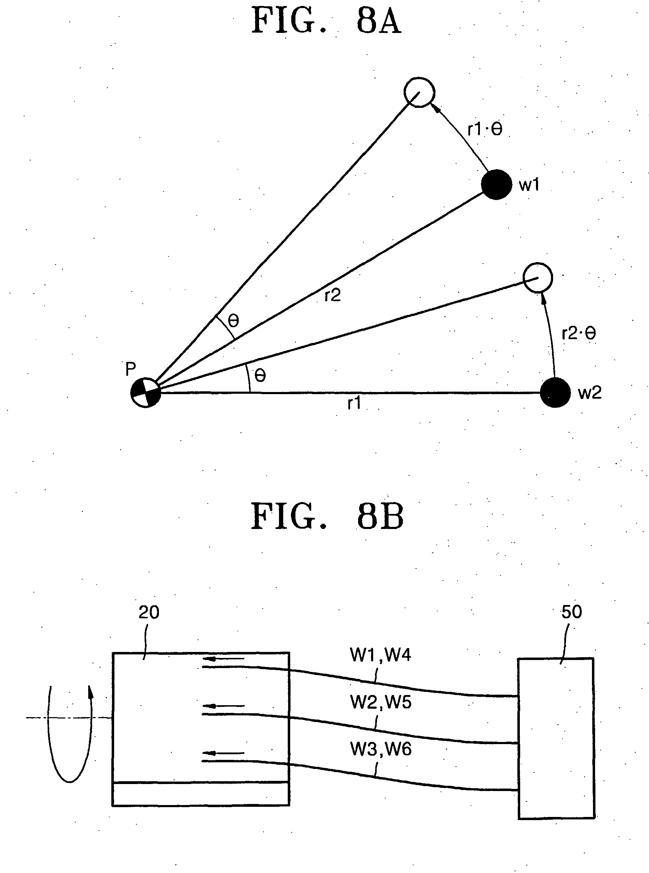

In the above structure, when the blade 20 rotates by an angle θ during the tilt control, as shown in Figure 7, the wires W1-W6 supporting the blade 20 are bent. The amounts of deformation of the wires W1-W6 are identical, as shown in Figure 8A. That is, since all wires W1-W6 are separated the same distance r from the center P of rotation, the amounts of deformation of the wires W1-W6 are all r×θ. Thus, as shown in Figure 8B, since the same tensile force acts on each wire, the conventional phenomenon in which some wires are buckled does not occur. Thus, when a vibration or impact is applied to the optical pickup, the blade 20 is prevented from moving in an undesired direction so that the control of the position of the objective lens 10 can be stably performed.

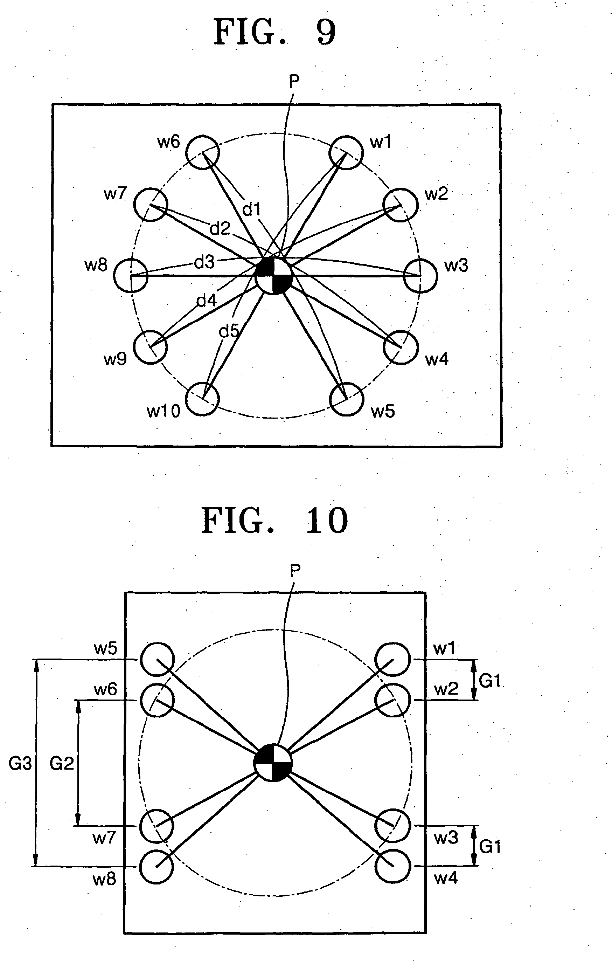

Meanwhile, although three pairs (six wires) are described in the preferred embodiment, when more number of wires, that is, ten wires W1-W10 shown in Figure 9, are symmetrically arranged at the same distance from the center P of rotation (d1=d2=d3=d4=d5), the same effect is obtained.

As another example, wires can be arranged as shown in Figure 10. A first group of wires W2, W3, W6, and W7 are arranged at the same distance from the center P of rotation, and a second group of wires W1, W4, W5, and W8 are arranged. Here, a gap G1 between the first and second groups is very smaller than gaps G2 and G3 between the first and second groups. This arrangement in a vertical direction is useful when accurately arranging all wires on a circumference of an imaginary circle is difficult. Thus, a compression force acting on some wires is minimized. That is, when the first group of the wires W2, W3, W6, and W7 arranged on the circumference and the second group of wires W1, W4, W5, and W8 which are not located on the circumference are arranged close to the first wire group, even when a difference in the amount of deformation is generated, the difference is very small so that a very small amount of a compression force to buckle the wires is generated accordingly. As a result, a stable control of the blade 20 is possible. Therefore, the above wire arrangement provides a stable control even when a small amount of an impact or vibration is applied.

As described above, in the objective lens driving apparatus of an optical pickup according to the present invention, by almost removing a difference in the amount of deformation between the elastic support members supporting the blade during tilt control, the elastic support members are prevented from being moved in arbitrary directions when a small impact or vibration is applied or generated. Thus, the control of the position of the objective lens can be stably performed.

## Claims

1. An objective lens driving apparatus for an optical pickup comprising:
a blade (20) on which an objective lens (10) is mounted;
a plurality of elastic support members (W1-W6) supporting the blade and capable of elastically moving with respect to the blade (20); and
a servo mechanism driving the blade up and down, left and right, and in a rotational direction, wherein the elastic support members (W1-W10) are grouped into pairs (W1, W6; W2, W5; W3, W4; W5, W6; W7, W8; W9, W10) of the elastic support members arranged to face each other with respect to a center of rotation of the blade (20), and distances between the elastic support members (W1-W6) in the respective pairs are identical **characterised in that** there are three or more such pairs (W1, W2; W2, W5; W3, W4; W5, W6; W7, W8; W9, W10) in which the distances between the elastic support members (W1-W10) in the respective pairs are identical.

2. The apparatus of claim 1, wherein a distance from each elastic support member to the centre of rotation of the blade is identical.

## Patentansprüche

1. Objektivlinsen-Antriebsvorrichtung für einen optischen Abnehmer, die umfasst:
eine Zunge (20), an der eine Objektivlinse (10) angebracht ist;
eine Vielzahl elastischer Trageelemente (W1-W6), die die Zunge tragen und sich in Bezug auf die Zunge (20) elastisch bewegen können; und
einen Servomechanismus, der die Zunge nach oben und nach unten, nach links und nach rechts sowie in einer Drehrichtung antreibt, wobei die elastischen Trageelemente (W1-W10) in Paaren (W1, W7; W2, W6; W3, W4; W5, W6; W7, W8; W9, W10) der elastischen Trageelemente gruppiert sind, die so angeordnet sind, dass sie einander in Bezug auf einen Drehmittelpunkt der Zunge (20) zugewandt sind, und Abstände zwischen den elastischen Trageelementen (W1-W6) in den jeweiligen Paaren identisch sind, **dadurch gekennzeichnet, dass** es drei oder mehr derartige Paare (W1, W2; W2, W5; W3, W4; W5, W6; W7, W8; W9, W10) gibt, bei denen die Abstände zwischen den elastischen Trageelementen (W1-W10) in den jeweiligen Paaren identisch sind.

2. Vorrichtung nach Anspruch 1, wobei ein Abstand von jedem elastischen Trageelement zu dem Drehmittelpunkt der Zunge identisch ist.

## Revendications

1. Dispositif d'entraînement de lentille d'objectif pour une tête de lecture optique comprenant :
une lame (20) sur laquelle une lentille d'objectif (10) est montée ;
une pluralité d'organes de support élastiques (W1-W6) supportant la lame et pouvant se déplacer élastiquement par rapport à la lame (20) ; et
un servomécanisme entraînant la lame vers le haut et vers le bas, vers la gauche et vers la droite, et dans un mouvement de rotation, dans lequel les organes de support élastiques (W1-W10) sont regroupés par paires (W1, W6 ; W2, W5 ; W3, W4 ; W5, W6 ; W7, W8 ; W9, W10) d'organes de support élastiques disposés en face les uns des autres par rapport à un centre de rotation de la lame (20), les distances entre les organes de support élastiques (W1, W6) dans les paires respectives étant identiques, **caractérisé en ce qu'**il y a trois, ou plus, de telles paires (W1, W2 ; W2, W5 ; W3, W4 ; W5, W6 ; W7, W8 ; W9, W10) les distances entre les organes de support élastiques (W1-W10) dans les paires respectives étant identiques.

2. Dispositif selon la revendication 1, dans lequel une distance depuis chaque organe de support élastique au centre de rotation de la lame est identique.
